# EUROPEAN PATENT SPECIFICATION

(11) **EP 3 334 105 B1**
(45) Date of publication and mention of the grant of the patent: **29.01.2020**
(21) Application number: 16290227.4
(22) Date of filing: 07.12.2016
(51) Int. Cl.: H04L 12/851, H04L 12/721, H04L 12/723, H04L 29/06

(54) **EMBEDDING OF CONTEXT INFORMATION IN NETWORKING PACKETS**
EINBETTUNG VON KONTEXTINFORMATIONEN IN VERNETZUNGSPAKETE
INTÉGRATION D'INFORMATIONS DE CONTEXTE DANS DES PAQUETS DE MISE EN RÉSEAU

(43) Date of publication of application: 13.06.2018
(73) Proprietor: Alcatel Lucent, 91620 Nozay (FR)
(72) Inventor: Van De Velde, Gunter, 2018 Antwerpen (BE); Henderickx, Wim, 2018 Antwerpen (BE); Vigoureux, Martin, 91620 Nozay (FR); Aissaoui, Mustapha, Ottawa, ON K2K 2E6 (CA)
(74) Representative: IP HILLS NV

(56) References cited:
- WO-A1-2015/140653
- US-A1- 2015 256 456

## Description

### Technical Field

The present invention generally relates to segment routing and more particular to the insertion and transportation of context information within networking packets along a segment routed network.

Context information is information about the networking packet which is not essential for the transportation of the networking packet between endpoints but that can be used to facilitate the transportation of the packet or to identify the packet. An example of context information is the Quality of Service label to differentiate between different types of data flow or a data flow identification to differentiate between different data flows in a network.

### Background

Segment routing is a form of source routing, i.e., the routing path of a networking packet is determined by a source or edge node in the network and the routing nodes along the path forward the networking packet according to routing path as determined by the source or edge node. The routing path is defined by a list of segments that are embedded as a segment list in the networking packets. Segment routing can be performed in an IPv6 network by IPv6 segments that are incorporated in the IPv6 header or by using the Multiprotocol Label Switching protocol.

Different solutions exist to incorporate context information into a network packet that is forwarded along a segment routed network.

The network service header (NSH header) may be used to add context information to a packet by a networking node. This technology is being actively standardized by the IETF with draft-ietf-sfc-nsh-10 as the latest draft. Networking nodes can then inspect the NSH header and make smart decisions based upon the derived context information thereby linking the service plane with the data-plane.

Another solution is by using the DiffServ protocol which provides a 6-bit differentiated services code point (DSCP) in the 8-bit differentiated services field (DS field) in the IP header for packet classification purposes. This solution offers less bits for the storage of context information but for some applications a single or dual bit may be sufficient. An example of such use-case is described in draft-chen-ippm-coloring-based-ipfpm-framework by the IETF under the title "IP Flow Performance Measurement Framework".

A third solution is by using context separation, i.e., a combination of Route-Targets and OSI Layer 2-3 virtual private networks (VPNs) as described in draft-ietf-bess-service-chaining-02 by the IETF titled "Service Chaining using Virtual Networks with BGP VPNs". This allows splitting out packets that have the same context into different context based routing planes.

WO2015/140653A1 discloses methods for creating label stacks include creating and sending a first SR label stack for a data packet, wherein the first SR label stack causes the data packet to be forwarded through the SR network using a first set of links, and wherein the first SR label stack includes a first service label that identifies a first service to be applied to the data packet by a second network device. In one embodiment, the methods include creating and sending a second SR label stack for an operations administration and maintenance (OAM) packet, wherein the second SR label stack causes the OAM packet to be forwarded through the SR network using the first set of links, and wherein the second SR label stack prevents the second network device from applying the first service to the OAM packet.

US2015/256456A1 discloses a system and method for using segment routing (SR) in native IP networks. The method involves receiving a packet. The packet is an IP packet and includes an IP header. The method also involves updating the packet. Updating the packet involves writing information, including a segment routing segment identifier, to the destination address of the packet.

### Summary

Although several solutions for embedding context information exist, they still exhibit several drawbacks. A problem with NSH is that it is difficult to deploy to existing hardware supported appliances, i.e. routers, switches, etc., because such an update does not fit easily or not at all on the currently used hardware architectures.

A problem with the DiffServ protocol is that it is only applicable on IP network packets but not on L2- or MPLS-based network packets. Moreover, the limited amount of available bits reduces the possibilities and flexibility offered by this solution.

A problem with context separation is that it quickly results in a non-manageable solution because the flow state and thus the context information is managed by the network and not retained within the packet itself.

It is an object of the present disclosure to solve the above problems and to provide a solution for incorporating context information in data flows that are routed by segment routing along a network

This object is achieved, according to a first aspect, by the networking device according to claim 1.

The networking device may thus relate to any device that incorporates a routing or forwarding function such as for example an edge router, a router, a gateway, a switch and a customer premises equipment (CPE). The routing function is performed by the routing module based on segment routing. In segment routing, a routing path is inserted by a source node. The routing path is defined by a list of routing instructions, called segments, that are to be executed or followed by the network devices in the networking path. Typically, a segment defines a specific route to which the packet must be sent or a networking path which must be followed by a certain router. The logging module may inserts context information into the segment list by encoding the context information into one or more additional segments which are than inserted into the segment list. The inserted segments with context information can be identified as such or will be skipped by other network devices and, therefore, the context information will travel along the network. The segment list may for example relate to MPLS labels or IPv6 segments. The information segments may then be removed by the last segment routing node on the path, or by a node programmed to remove the one or more information segments.

A novel type of segment, the information segment, is thus defined which can be used by any device along the routed path to insert context information into the packet. This approach offers several advantages. First of all, an existing hardware based networking node, i.e., a router node using hardware implemented packet processing, can easily be adapted to support the logging of context information based on information segments. This is possible because no new fields are defined such as is the case with NSH. Second, the solution is not limited to IPv6 packets as segment routing can be used on a wide diversity of Layer 2 or 3 protocols by the use of MPLS. Moreover, segment lists are not limited in size, so in principle there is no constraint in the amount of bits needed to embed the context information. It just suffices to add information segments when further bits are needed to encode the context information. Another advantage is that information segments make it more easy to define flow based routing conditions into the segment list. Therefore, routers do not need to maintain a flow-based forwarding state behaviour but can just use the context information in the segment list in order to derive the flow state information.

The routing module thus processes information segments different than routings segments because the information segment are skipped. This allows to preserve the context information in the information segments. So even if the routing module drops the routing segments, the information segments will remain in the packet along the complete routed path. The advantage of this is that context information from previous networking nodes is preserved throughout the full routed path and does not become obsolete or dropped when a networking node has processed or used it.

The first information segment of a sequence of information segments that the networking node will process does not necessarily comprise the context information but is used to define a range of following segments used for storing context information.

This has the advantage that only one segment value or identifier must be preserved for identifying context information while all other values may be used for other purposes such as routing. When the routing module identifies this one segment, it can just discard the following segments. This way, the following information segments may even comprise values that are preserved for the identification of routing segments. Another advantage is that unnecessary processing of information segments is avoided because the routing module will just skip all information segments instead of first reading all the values.

Alternatively or complementary, an information segment of the one or more information segments comprises a segment identifier selected from a set or range of segment identifiers indicative for logging of context information.

In other words, a value of an information segment carries a fixed meaning. This has the advantage that context information may be incorporated by a single segment. Different types or values of context information may then be defined by a predefined set of information segment or segment identifiers. Every networking device then treats the segments according to this predefined set.

The context information comprises a packet colour defining a block of consecutive network packets to which the network packet belongs.

This way the solution as provided in draft-chen-ippm-coloring-based-ipfpm-framework-06 by the IETF titled "IP Flow Performance Measurement Framework" can be extended to other protocols than IPv4 or IPv6.

The routing module may process the segment list according to the following steps:
- identify a segment from the segment list as a next routing segment; and
- drop the next routing segment from the segment list; and
- forward the network packet according to the next routing segment.

This way, the next router will find its next segment at the top or beginning of the segment list. Alternatively, a list pointer may be used wherein no segments are dropped from the segment list, but a pointer to the next segment in the list is maintained.

The logging module may then be further configured to:
- receive from a mapping controller a mapping table comprising the set of segment identifiers.

In other words, the predefined set of information segments is distributed by a mapping controller, i.e., a networking device that provides the predefined set to all networking devices in the network. The predefined set may then be defined locally, i.e., the set is applicable to a local network, e.g., between edge routers, or the set may be defined globally, i.e., all networking device use the same mapping. This has the advantage that the logging of context information may be controlled by a centralized entity thereby controlling the logging from the service plane while transporting the context information over the data plane.

According to a second aspect, the disclosure relates to the method according to claim 5.

According to a third aspect, the disclosure relates to a computer program product comprising a computer-executable instructions for performing the method according to the second aspect when the program is run on a computer.

According to a fourth aspect, the disclosure relates to a computer readable storage medium comprising the computer program product according to the third aspect.

According to a fifth aspect, the disclosure relates to a data processing system programmed for carrying out the method according to the second aspect.

### Brief Description of the Drawings

Fig. 1 illustrates a networking packet that is forwarded along a networking path by different routers according to an embodiment of the invention; and
Fig. 2A, 2B and 2C illustrate a networking devices according to different embodiments of the invention; and
Fig. 3 illustrates steps performed by a networking device according to an embodiment of the invention; and
Fig. 4 illustrates a segment list comprising information segments according to an embodiment of the invention; and
Fig. 5 illustrates a segment list comprising information segments according to an embodiment of the invention; and
Fig. 6 illustrates steps performed by a networking device according to an embodiment of the invention.
Fig. 7 illustrates a suitable computing system for performing methods according to embodiments of the invention.

### Detailed Description of Embodiment(s)

The present invention relates to segment routing and more particular to the insertion and transportation of context information within networking packets along a segment routed network. Context information is information about the networking packet which is not essential for the transportation or routing of the networking packet between endpoints but that can be used to facilitate the transportation of the packet or to identify the packet. An example of context information is the Quality of Service label to differentiate between different types of data flow or a data flow identification to differentiate between different data flows in a network. Such context information may be inserted into a network packet along the networking path when travelling between endpoints. This insertion may be performed by forwarding networking devices found along the networking path, e.g., by switches, (edge) routers, access points, gateways...

Segment routing is a form of source routing, i.e., the routing path of a networking packet is determined by a source or edge node in the network and the routing nodes along the path forward the networking packet according to routing path as determined by the source or edge node. The routing path is defined by a list of segments that are embedded as a segment list in the networking packets. Segment routing can be performed in an IPv6 network by IPv6 segments that are incorporated in the IPv6 header or by using the Multiprotocol Label Switching protocol (MPLS). The embodiment below may conform to the segment routing as proposed in draft-ietf-spring-segment-routing-10 by the IETF titled "Segment Routing Architecture".

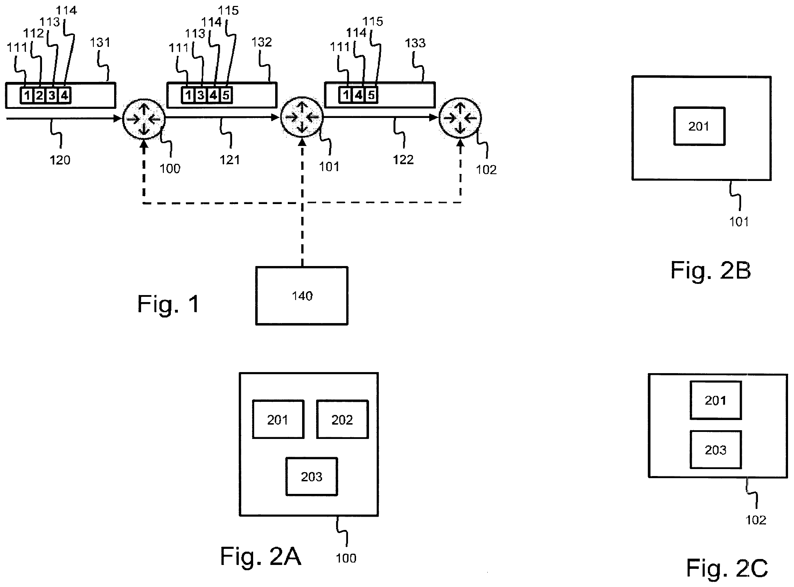

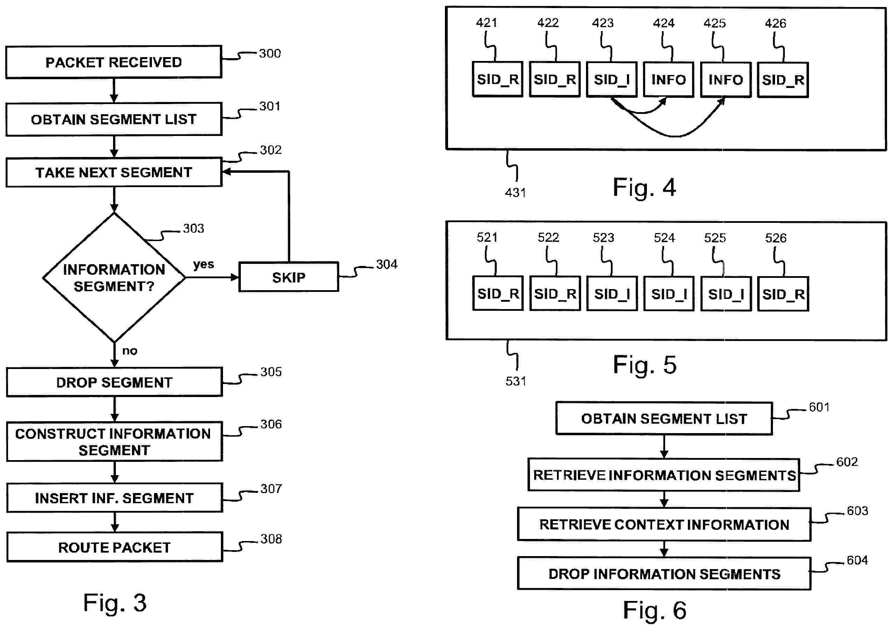

Fig. 2A, 2B and 2C illustrate such a forwarding networking devices 100,101 and 102 according to embodiments of the invention. Fig. 1 illustrates an example where devices 100, 101 and 102 are used for routing a packet 131 along a communication network by segment routing and will be used as an illustration of aspects of the invention. Devices 100, 101 and 102 comprise a routing module 201 and, optionally, a logging module 202 and telemetry module 203. Fig. 3 illustrates steps performed by these modules 201, 202 and 203 according to an embodiment of the invention.

The routing module of device 100 is configured to receive, in a first step 300, a networking packet 131 over one or more networking interfaces. The routing module is configured to perform segment routing. The networking packet 131 comprises a segment list further comprising segments 111-114. In a next step 301, the routing module 201 of device 100 retrieves this segment list from networking packet 131. Then, from the segment list, the routing module 201 takes the next segment from the segment list, e.g., segment 111 as shown in Fig. 1. The next segment may for example be the first segment at the beginning of the segment list. Alternatively, the segment list may comprise a segment pointer pointing to the next segment in the segment list. In a next step 303, routing module 201 of device 100 checks whether the retrieved segment is a routing segment or an information segment related to context information.

Fig. 4 illustrates an example of a segment list 431 according to an embodiment comprising both routing segments 421, 422, 426 and information segments 423, 424, 425. When routing module 201 retrieves the first information segment 423 in the segment list 431 under step 302, it identifies segment 423 as an information segment because segment 423 comprises a dedicated value or identification number. Segment 423 further comprises a value indicating the number of segments following segment 423 that are also information segments. When routing module 201 has identified segment as an information segment in step 303, it then proceeds to step 304 and skips all the following information segments 424, 425 in the segment list 431 as indicated in information segment 423.

Fig. 5 illustrates another example of a segment list 531 according to an embodiment comprising both routing segments 521, 522, 526 and information segments 523, 524 and 525. When routing module 201 retrieves the first information segment 523 from the segment list 531 under step 502, it identifies segment 523 as an information segment because segment 523 comprises a value or identification number from a predefined set or range of information values. If the value appears in this predefined set or range, the segment 523 is identified as an information segment under step 303. Then, this segment is skipped under step 304 by the routing module and the routing module proceeds to step 302 where the next segment 524 is retrieved from the segment list 531. The routing module will then perform steps 302, 303 and 304 another two times in order to skip the information segments 524 and 525 until routing segment 526 is retrieved.

Returning now back to the example from Fig. 1, segment 111 is an information segment and segments 112, 113 and 114 are all routing segments. Routing module 201 of device 100 will thus skip information segment 111 and proceed to segment 112 which is a routing segment. When the segment is identified as a routing segment, the routing module 201 drops the segment 112 from the segment list in step 305 such that the next device 101 in the routing path does not encounter segment 112, but the next routing segment 113.

In the example of Fig. 1, routing device 100 also comprises a logging module 202 for inserting context information into routed packets. If there is context information that is to be added to the network packet, the logging module 202 performs steps 306 and 307, otherwise it directly proceeds to step 308. In step 306, the logging module embeds the context information into information segments. This may for example be done by information segments 423, 424, 425 of Fig. 4 or by information segments 523, 524, 525 of Fig. 5. Returning to the example of Fig. 1, logging module 202 of device 100 inserts information segment 115 into the segment list. When the context information is inserted into the segment list, the routing module performs step 308 wherein the retrieved routing segment 112 is used to route packet 131 as packet 132 to the next networking device 101 along networking path 121.

Information segments are segments that are not used as routing instructions for following routers, but for carrying context information about contexts, services and actions exposed to the network packet. This context information may then be used to aid in service treatment when it travels through the network. Preferably, the information segments are inserted by the logging module 202 at the end of the segment list. This way, routing nodes will not perform unnecessary processing by skipping information segments.

Packet 132 then arrives at routing device 101 which only comprises a routing module 201 and no logging module 202 or telemetry module 203. In other words, device 101 cannot retrieve context information from information segments nor insert context information into information segments and thus into the segment list. After reception of the packet 132 and segment list under steps 300 and 301, device 101 first skips the first information segment 111 under steps 302, 303 and 304 and then retrieves and drops the next routing segment 113 under steps 302, 303 and 305. As device 101 does not comprise a logging module 202, steps 306 and 307 are not performed and, thus, routing module 201 routes packet 132 as packet 133 to the next routing device 102 along networking path 122.

In the example of Fig. 1, device 102 comprises a routing module 201 and telemetry module 203. By routing module 201, the packet 133 is routed further along the network as illustrated according to the above embodiments. By telemetry module 203, the device 102 retrieves the context information as embedded in information segments 111 and 115 from the segment list. This process is illustrated by the steps 601 to 604 of Fig. 6. In the first step 601, the telemetry module obtains the segment list from packet 133. Then, under step 602, the telemetry module 203 retrieves the information segments 111 and 115 from the segment list, for example in a similar fashion as under step 303. Then, in the next step 603, telemetry module 203 retrieves the context information from the information segments 111 and 115. Optionally, telemetry module 203 may proceed further to step 604 and drop the information segments 111 and 115 from the segment list.

It should be understood that any routing device supporting information segments may remove information segments from the segment list as needed by the service or function performed. Advantageously, a routing device at the of the segment route will remove all information segments left in the segment list.

As outlined above, information segments may be identified by a unique identifier or a range of unique identifiers, further referred to as information identifiers. These information identifiers may be pre-programmed into routing devices 100-102. However, this does not allow a lot of flexibility. Therefore, the information identifiers may be retrieved from a mapping server 140. This mapping server 140 may then provide a single information identifier or a range of such information identifiers. The information identifiers may further be globally unique, i.e., applicable to any routing device, or only locally unique, i.e., only applicable to a subset of routing devices, for example within a certain network or between edge routers.

Information segments can be used for different purposes by network devices that comprise a telemetry module 203 for extracting the context information from the information segments.

Information segments may be used for performing measurements on networking packets in order to identify black holes or de-synchronisations between the control- and data-plane. For example, colour information may be inserted as context information in packets according to the PNPM framework as proposed in draft-ietf-ippm-alt-mark-02 by the IETF under the title "Alternate Marking method for passive performance monitoring". Routing devices using the colour information for performance monitoring may then remove the information segments at the end of the route.

The information segment may be used as replacement for the dedicated Entropy Label as proposed by the IETF RFC 6790 thereby reducing the size of the segment list.

The information segments may be used for tracking activities on the network path, e.g., for information about policies that were applied or about services that were applied (firewall, IDS). More specifically, when a certain policy or service was applied by a previous routing device and this information was added in an information segment, a following routing device may use this information in order to avoid performing the same service or policy a second time.

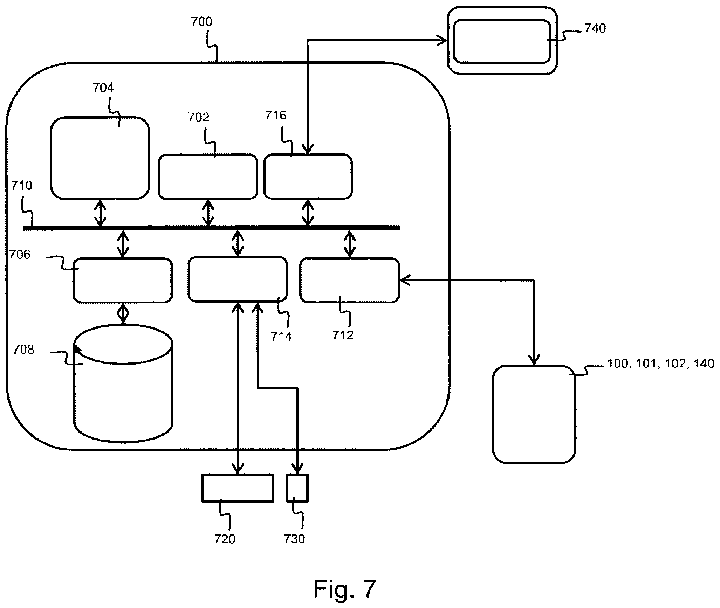

Fig. 7 shows the computing system 700 according to an embodiment of the invention. Computing system 700 is suitable for performing the steps according to the above embodiments. Computing system 700 may also be incorporated in or used as a routing device 100, 101, 102. Computing system 700 may in general be formed as a suitable general purpose computer and comprise a bus 710, a processor 702, a local memory 704, one or more optional input interfaces 714, one or more optional output interfaces 716, a communication interface 712, a storage element interface 706 and one or more storage elements 708. Bus 710 may comprise one or more conductors that permit communication among the components of the computing system 700. Processor 702 may include any type of conventional processor or microprocessor that interprets and executes programming instructions. Local memory 704 may include a random access memory (RAM) or another type of dynamic storage device that stores information and instructions for execution by processor 702 and/or a read only memory (ROM) or another type of static storage device that stores static information and instructions for use by processor 702. Input interface 714 may comprise one or more conventional mechanisms that permit an operator to input information to the computing device 700, such as a keyboard 720, a mouse 730, a pen, voice recognition and/or biometric mechanisms, etc. Output interface 716 may comprise one or more conventional mechanisms that output information to the operator, such as a display 740, etc. Communication interface 712 may comprise any transceiver-like mechanism such as for example one or more Ethernet interfaces that enables computing system 700 to communicate with other devices and/or systems, for example with other routing devices 100, 101, 102 or mapping server 140. The communication interface 712 of computing system 700 may be connected to such another computing system by means of a local area network (LAN) or a wide area network (WAN) such as for example the internet. Storage element interface 706 may comprise a storage interface such as for example a Serial Advanced Technology Attachment (SATA) interface or a Small Computer System Interface (SCSI) for connecting bus 710 to one or more storage elements 708, such as one or more local disks, for example SATA disk drives, and control the reading and writing of data to and/or from these storage elements 708. Although the storage elements 708 above is described as a local disk, in general any other suitable computer-readable media such as a removable magnetic disk, optical storage media such as a CD or DVD, -ROM disk, solid state drives, flash memory cards, ... could be used. The system 700 described above can also run as a virtual machine above the physical hardware.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. Networking device (100) for forwarding network packets (131, 132, 133) over a network by segment routing; the networking device comprising:
- a routing module (201) configured to receive a network packet comprising a segment list;
- a logging module (202) configured to construct (306) one or more first information segments (423-425, 523-525, 115) comprising context information; and to insert (307) the one or more first information segments into the segment list; and wherein a first information segment of the one or more first information segments comprises a first segment identifier (423) identifying the following information segments (424-425) as segments comprising the context information and/or wherein the one or more first information segments comprise a segment identifier (523-525) selected from a set of segment identifiers indicative for logging of context information; and wherein the context information comprises a packet colour defining a block of consecutive network packets to which the network packet belongs;
and wherein the routing module is further configured to:
- retrieve the segment list from the network packet;
- identify one or more segments in the segment list as information segments comprising context information;
- skip the one or more identified segments and proceed to a next routing segment in the segment list;
- forward the network packet over the network according to the next routing segment in the segment list.

2. Networking device (100) according to claim 1 wherein the routing module is further configured to:
- identify (303) a segment from the segment list as the next routing segment; and
- drop (305) the next routing segment from the segment list.

3. Networking device according to claim 1 wherein the logging module is further configured to:
- receive from a mapping controller (140) a mapping table comprising the set of segment identifiers.

4. Networking device according to claim 1 wherein the segment list comprises MPLS labels or IPv6 segments.

5. A method for forwarding network packets (131, 132, 133) over a network by segment routing; the method comprising:
- receiving a network packet comprising a segment list;
- constructing (306) one or more first information segments comprising context information; and wherein a first information segment of the first information segments comprises a first segment identifier (423) identifying the following information segments (424-425) as segments comprising the context information and/or wherein the one or more first information segments comprise a segment identifier (523-525) selected from a set of segment identifiers indicative for logging of context information; and wherein the context information comprises a packet colour defining a block of consecutive network packets to which the network packet belongs;
- inserting (307) the one or more first information segments into the segment list (111-115); and
- retrieving the segment list from the network packet;
- identifying one or more segments in the segment list as information segments comprising context information;
- skipping the one or more identified segments and proceed to a next routing segment in the segment list;
- forwarding (308) the network packet (132) according to the next routing segment in the segment list over the network

6. A computer program product comprising computer-executable instructions for performing the method according to claim 5 when the program is run on a computer.

7. A computer readable storage medium comprising the computer program product according to claim 6.

8. A data processing system (700) programmed for carrying out the method according to claim 5.

## Patentansprüche

1. Netzwerkvorrichtung (100) zum Weiterleiten von Netzwerkpaketen (131, 132, 133) über ein Netzwerk durch Segment-Routing; wobei die Netzwerkvorrichtung umfasst:
- ein Routing-Modul (201), das zum Empfangen eines Netzwerkpakets konfiguriert ist, das eine Segmentliste umfasst;
- ein Protokollierungsmodul (202), das zum Erstellen (306) eines oder mehrerer erster Informationssegmente (423-425, 523-525, 115), die Kontextinformationen umfassen, und zum Einfügen (307) des einen oder der mehreren ersten Informationssegmente in die Segmentliste konfiguriert ist; und wobei ein erstes Informationssegment des einen oder der mehreren ersten Informationssegmente eine erste Segmentkennung (423) umfasst, welche die folgenden Informationssegmente (424-425) als Segmente identifiziert, welche die Kontextinformationen umfassen, und/oder wobei das eine oder die mehreren ersten Informationssegmente eine Segmentkennung (523-525) umfassen, die aus einem Satz von Segmentkennungen ausgewählt ist, die für Protokollierung von Kontextinformationen bezeichnend ist; und wobei die Kontextinformationen eine Paketfarbe umfassen, die einen Block von aufeinanderfolgenden Netzwerkpaketen definiert, zu dem das Netzwerkpaket gehört; und wobei das Routing-Modul ferner konfiguriert ist zum:
- Abrufen der Segmentliste aus dem Netzwerkpaket;
- Identifizieren eines oder mehrerer Segmente in der Segmentliste als Informationssegmente, die Kontextinformationen umfassen;
- Überspringen des einen oder der mehreren identifizierten Segmente und Weitergehen zu einem nächsten Routing-Segment in der Segmentliste;
- Weiterleiten des Netzwerkpakets über das Netzwerk gemäß dem nächsten Routing-Segment in der Segment-Liste.

2. Netzwerkvorrichtung (100) nach Anspruch 1 wobei das Routing-Modul ferner konfiguriert ist zum:
- Identifizieren (303) eines Segments aus der Segmentliste als das nächste Routing-Segment; und
- Verwerfen (305) des nächsten Routing-Segments aus der Segmentliste.

3. Netzwerkvorrichtung nach Anspruch 1 wobei das Protokollierungsmodul ferner konfiguriert ist zum:
- Empfangen einer Zuordnungstabelle, die den Satz von Segmentkennungen umfasst, von einer Zuordnungssteuerung (140).

4. Netzwerkvorrichtung nach Anspruch 1 wobei die Segmentliste MPLS-Etikette oder IPv6-Segmente umfasst.

5. Verfahren zur Weiterleitung von Netzwerkpaketen (131, 132, 133) über ein Netzwerk durch Segment-Routing; wobei das Verfahren umfasst:
- Empfangen eines Netzwerkpakets, das eine Segmentliste umfasst;
- Erstellen (306) eines oder mehrerer erster Informationssegmente, die Kontextinformationen umfassen; und wobei ein erstes Informationssegment der ersten Informationssegmente eine erste Segmentkennung (423) umfasst, welche die folgenden Informationssegmente (424-425) als Segmente identifiziert, welche die Kontextinformationen umfassen, und/oder wobei das eine oder die mehreren ersten Informationssegmente eine Segmentkennung (523-525) umfassen, die aus einem Satz von Segmentkennungen ausgewählt ist, die für Protokollierung von Kontextinformationen bezeichnend sind; und wobei die Kontextinformationen eine Paketfarbe umfassen, die einen Block von aufeinanderfolgenden Netzwerkpaketen definiert, zu dem das Netzwerkpaket gehört;
- Einfügen (307) des einen oder der mehreren Informationssegmente in die Segmentliste (111-115); und
- Abrufen der Segmentliste aus dem Netzwerkpaket;
- Identifizieren eines oder mehrerer Segmente in der Segmentliste als Informationssegmente, die Kontextinformationen umfassen;
- Überspringen des einen oder der mehreren identifizierten Segmente und Weitergehen zu einem nächsten Routing-Segment in der Segmentliste;
- Weiterleiten (308) des Netzwerkpakets (132) gemäß dem nächsten Routing-Segment in der Segmentliste über das Netzwerk.

6. Computerprogrammprodukt, umfassend computerausführbare Anweisungen zum Durchführen des Verfahrens nach Anspruch 5 bei Ausführung des Programms auf einem Computer.

7. Computerlesbares Speichermedium, umfassend das Computerprogrammprodukt nach Anspruch 6.

8. Datenverarbeitungssystem (700), das zum Ausführen des Verfahrens nach Anspruch 5 programmiert ist.

## Revendications

1. Dispositif de mise en réseau (100) destiné à retransmettre des paquets de réseau (131, 132, 133) sur un réseau par acheminement de segments ; le dispositif de mise en réseau comprenant :
- un module d'acheminement (201) configuré pour recevoir un paquet de réseau comprenant une liste de segments ;
- un module d'enregistrement (202) configuré pour construire (306) un ou plusieurs premiers segments d'informations (423-425, 523-525, 115) comprenant des informations de contexte ; et pour insérer (307) le ou les premiers segments d'informations dans la liste de segments ; et dans lequel un premier segment d'informations du ou des premiers segments d'informations comprend un premier identifiant de segment (423) identifiant les segments d'informations suivants (424-425) comme des segments comprenant les informations de contexte et/ou dans lequel le ou les premiers segments d'informations comprennent un identifiant de segment (523-525) sélectionné parmi un ensemble d'identifiants de segments indiquant un enregistrement d'informations de contexte ; et dans lequel les informations de contexte comprennent une couleur de paquet définissant un bloc de paquets de réseau consécutifs auquel appartient le paquet de réseau ; et
dans lequel le module d'acheminement est en outre configuré pour :
- récupérer la liste de segments dans le paquet de réseau ;
- identifier un ou plusieurs segments sur la liste de segments comme des segments d'informations comprenant des informations de contexte ;
- ignorer le ou les segments identifiés et passer à un segment d'acheminement suivant sur la liste de segments ;
- retransmettre le paquet de réseau sur le réseau selon le segment d'acheminement suivant de la liste de segments.

2. Dispositif de mise en réseau (100) selon la revendication 1, dans lequel le module d'acheminement est en outre configuré pour :
- identifier (303) un segment sur la liste de segments comme le segment d'acheminement suivant ; et
- éliminer (305) le segment d'acheminement suivant de la liste de segments.

3. Dispositif de mise en réseau selon la revendication 1, dans lequel le module d'enregistrement est en outre configuré pour :
- recevoir d'un contrôleur de mappage (140) une table de mappage comprenant l'ensemble d'identifiants de segments.

4. Dispositif de mise en réseau selon la revendication 1, dans lequel la liste de segments comprend des étiquettes MPLS ou des segments IPv6.

5. Procédé destiné à retransmettre des paquets de réseau (131, 132, 133) sur un réseau par acheminement de segments ; le procédé comprenant :
- la réception d'un paquet de réseau comprenant une liste de segments ;
- la construction (306) d'un ou de plusieurs premiers segments d'informations comprenant des informations de contexte ; et dans lequel un premier segment d'informations des premiers segments d'informations comprend un premier identifiant de segment (423) identifiant les segments d'informations suivants (424-425) comme des segments comprenant les informations de contexte et/ou dans lequel le ou les premiers segments d'informations comprennent un identifiant de segment (523-525) sélectionné parmi un ensemble d'identifiants de segments indiquant un enregistrement d'informations de contexte ; et dans lequel les informations de contexte comprennent une couleur de paquet définissant un bloc de paquets de réseau consécutifs auquel appartient le paquet de réseau ;
- l'insertion (307) du ou des premiers segments d'informations dans la liste de segments (111-115) ; et
- la récupération de la liste de segments du paquet de réseau ;
- l'identification d'un ou de plusieurs segments sur la liste de segments comme des segments d'informations comprenant des informations de contexte ;
- le fait d'ignorer le ou les segments identifiés et de passer à un segment d'acheminement suivant sur la liste de segments ;
- la retransmission (308) du paquet de réseau (132) selon le segment d'acheminement suivant sur la liste de segments sur le réseau.

6. Produit de programme informatique comprenant des instructions exécutables par ordinateur pour effectuer le procédé selon la revendication 5 lorsque le programme est exécuté sur un ordinateur.

7. Support de stockage lisible par ordinateur comprenant le produit de programme informatique selon la revendication 6.

8. Système de traitement de données (700) programmé pour effectuer le procédé selon la revendication 5.
